# EUROPEAN PATENT APPLICATION

(11) **EP 3 862 329 A1**
(43) Date of publication of application: **11.08.2021**
(21) Application number: 19869436.6
(22) Date of filing: 11.09.2019
(51) Int. Cl.: C03B 11/00, G02B 1/00, G02B 3/00

(54) **OPTICAL ELEMENT AND PRODUCTION METHOD THEREFOR**

(30) Priority: 02.10.2018 JP 2018187525
(71) Applicant: Panasonic Corporation, Kadoma-shi Osaka 571-8501 (JP)
(72) Inventor: NANBA, Toru, Osaka-shi, Osaka 540-6207 (JP); SUZUKI, Tetsuya, Osaka-shi, Osaka 540-6207 (JP); KUROSAKI, Ryo, Osaka-shi, Osaka 540-6207 (JP); MURATA, Jun, Osaka-shi, Osaka 540-6207 (JP)
(74) Representative: Eisenführ Speiser
(86) International application number: PCT/JP2019/035678
(87) International publication number: WO 2020/071071

(57) **Abstract**

There is provided a method for manufacturing a method for manufacturing an optical element, wherein a mold-press molding is performed by use of a material body having a prismatic shape to form a light transmission part and a flange of the optical element, the flange extending outward from the light transmission part. In the manufacturing method, only a corner of the material body to be subjected to a mold transfer to provide an edge face of the flange.

## Description

### TECHNICAL FIELD

The present disclosure relates to an optical element and a method for manufacturing the optical element. More specifically, the present disclosure relates to the optical element which at least contributes to a light transmission, and also relates to a method for manufacturing such optical element.

### BACKGROUND ART

Heretofore, the optical element made of a resin material, a glass material, or the like has been used for various purposes. For example, the optical element has been used as a lens, a prism, a mirror, an optical fiber, or the like.

In recent years, the optical element has been used in the optical sensing field and the like. For example, the optical element is used as an optical sensor for use in a surveillance system for disaster prevention, crime prevention and/or the like, and also a vehicle-mounted sensor module for use in a driver-assistance system.

### PATENT DOCUMENT (RELATED ART PATENT DOCUMENT)

PATENT DOCUMENT 1: JP-A-2013-14455

### SUMMARY OF THE INVENTION

### PROBLEMS TO BE SOLVED BY THE INVENTION

The inventors of this application have conceived that a conventional method of manufacturing an optical element has problems to be solved, and have found a necessity to take measures against the problems associated with the conventional method. Specifically, the inventors of this application have found the following problems.

An optical element is manufactured by molding. Alternatively, the optical element is manufactured by a process such as cutting, grinding and/or polishing. For example, a glass lens which is excellent in optical performance and/or heat resistance is typically subjected to the process based on the grinding and/or the polishing.

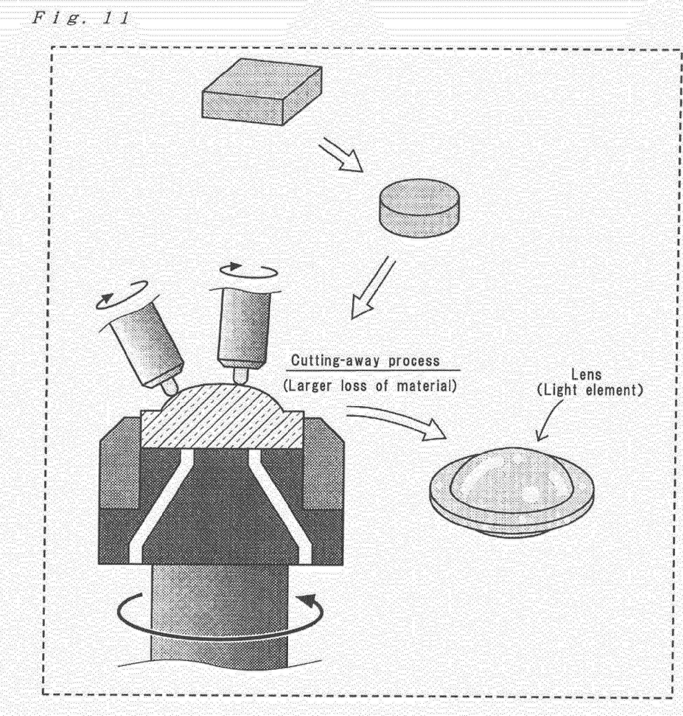

In manufacturing a lens by grinding and/or polishing, the lens is provided by cutting away a part of a raw material body for the lens, which leads to an increase in a material loss (Fig. 11). In manufacturing a lens by a mold-press molding, it is typically difficult to mold a glass material since the glass material has a small coefficient of linear expansion. Consequently, prior to such mold-press molding of the material, it is necessary to provide almost a lens shape of the glass material, e.g., a spherical shape or a flattened spherical shape thereof by, for example, grinding process, which can result in too large loss of the material to ignore.

In consideration of the problems, the present disclosure has been created. That is, a main object of the present disclosure is to provide a method for manufacturing an optical element, the method being more desirable in terms of reduced material loss.

### MEANS FOR SOLVING THE PROBLEMS

The inventors of this application have attempted to address the problems described above, from a novel standpoint rather than a continual standpoint of the conventional art. As a result, the inventors of this application have created a method for manufacturing an optical element, the method being capable of attaining the main object described above.

The present disclosure provides a method for manufacturing an optical element. In this manufacturing method, a mold-press molding is performed by use of a material body having a prismatic shape to together form a light transmission part and a flange of the optical element, the flange extending outward from the light transmission part, and only a corner of the material body is subjected to a mold transfer to provide an edge face of the flange.

The present disclosure also provides an optical element which is manufactured by the method. This optical element includes a light transmission part and a flange extending outward from the light transmission part. The flange has a plurality of furthest edge portions at an edge face of the flange, the furthest edge portions being located furthest from a center of the light transmission part. The plurality of furthest edge portions serve as a positioning face for placing the optical element.

### EFFECT OF THE INVENTION

In accordance with the method of the present disclosure, it is possible to more suitably manufacture an optical element in terms of reduced material loss. That is, it is possible to manufacture the optical element with reduced material loss of the material body.

Specifically, a mold-press molding for manufacturing the optical element causes only a portion corresponding to the furthest edge portion in an edge face of the optical element to be subjected to a mold transfer. In other words, with regard to the edge face of a flange, the entire edge face is not subjected to the mold transfer, but only the corner of the edge face is subjected to the mold transfer. According to the present disclosure, therefore, there is a tendency to suppress an excessive increase in load to be applied to the material body during the mold-press molding. It is thus possible to achieve less material loss of the optical element since there is no necessity to beforehand provide a pre-shape (e.g., a spherical shape or a flattened spherical shape) which is relatively close to a shape of the optical element to be manufactured by, for example, grinding process of the material body prior to the mold-press molding.

The present disclosure can reduce the material loss, which leads to a positive use of even an expensive material. For example, it is possible to positively use an expensive glass material such as a chalcogenide material and/or a chalcohalide material which are/is excellent in desired optical characteristics.

In the optical element manufactured by the method according to the present disclosure, the furthest edge portion molded by the mold transfer can be used as a "positioning face". More specifically, the furthest edge portion of the flange, which corresponds to the corner of the material body having been subjected to the molding, can be suitably used as a positioning face in placing the optical element with respect to a fixing member such as a lens barrel. Thus, the optical element according to the present disclosure has no problem in practical use even though only the furthest edge portion of the periphery of the optical element is one having been subjected to the mold transfer.

### BRIEF DESCRIPTION OF THE DRAWINGS

Fig. 1 illustrates schematic sectional views of lenses as optical elements, in which Fig. 1(A) illustrates a biconvex lens, Fig. 1(B) illustrates a biconcave lens, and Fig. 1(C) illustrates a meniscus lens.
Fig. 2 illustrates schematic sectional views and schematic plan views for explaining a method according to the present disclosure, in which a mold-press molding for manufacturing a biconcave lens is shown.
Fig. 3 illustrates schematic sectional views of steps of the method according to the present disclosure, in which the mold-press molding for manufacturing the biconcave lens is shown.
Fig. 4 illustrates a schematic sectional view of a structure of a metal mold for use in a mold-press molding.
Fig. 5 illustrates schematic sectional views of steps of a method according to the present disclosure, in which a mold-press molding for manufacturing a biconvex lens is performed.
Fig. 6 illustrates schematic sectional views and schematic plan views for explaining the method according to the present disclosure, in which the mold-press molding for manufacturing the biconvex lens is performed.
Fig. 7 illustrates schematic views regarding "Chamfering Embodiment".
Fig. 8 illustrates schematic sectional views of steps of a method according to the present disclosure, the method being one using a chamfered material body.
Fig. 9 illustrates schematic perspective views and schematic plan views of exemplary forms of optical elements according to the present disclosure, in which Fig. 9(A) illustrates a biconvex lens, and Fig. 9(B) illustrates a biconcave lens.
Fig. 10 illustrates a schematic sectional view of a mold-press molding for forming a meniscus lens in accordance with the present disclosure.
Fig. 11 illustrates a schematic view for explaining an exemplary method for manufacturing a lens by cutting away a part of a raw material body through grinding and polishing processes of the body (Conventional Art).

### MODES FOR CARRYING OUT THE INVENTION

Hereinafter, a method for manufacturing an optical element and also an optical element manufactured by the method will be described in detail according to one embodiment of the present disclosure. In some cases, however, a specific description more than necessary will not be given. For example, a detailed description on a well-known matter, or a duplicate description on a substantially identical structure/configuration will not be given in some cases. This is because of avoiding a description redundant more than necessary and thus facilitating the better understanding of those skilled in the art.

The applicant provides the attached drawings and the following description in order for those skilled in the art to sufficiently understand the present disclosure, and they are not intended to limit the subject matter of the disclosure to the claims. In the drawings, constituent parts/members/elements are schematically exemplified for the understanding of a manufacturing method and an optical element according to the present disclosure, and thus can be different from actual ones in terms of, for example, outer appearance and dimensional ratio.

The directions of "upper" and "lower", which are directly or indirectly used herein, are ones based on the drawings. In a preferred embodiment, a vertically downward direction (i.e., a direction in which gravity acts) corresponds to a "downward direction", and the opposite direction thereto corresponds to an "upward direction".

The term "sectional view" as used herein is based on a virtual section taken along a thickness direction of an optical element. In other words, the "sectional view" corresponds to a view of a section taken along the thickness of the optical element. Typically, the "thickness direction of optical element" can correspond to a direction in which light transmits through the optical element. Also the term "plan view" as used herein is based on a view in a case where an object of interest is seen from above or below in the thickness direction of the object of interest.

### [Method of the Present Disclosure]

The present disclosure relates to a method for manufacturing the optical element. In particular, the present disclosure relates to a method for manufacturing the optical element from a material body by a mold-press molding. The mold-press molding is a technique for molding the material body through pressing thereof by use of a metal mold. The present disclosure is characterized by the molding of the material body.

Specifically, the mold-press molding is performed using the material body to together form a light transmission part of the optical element and a flange of the optical element, the flange extending outward from the light transmission part, such that only a furthest edge portion corresponding to a corner of an edge face of the flange is subjected to a mold transfer.

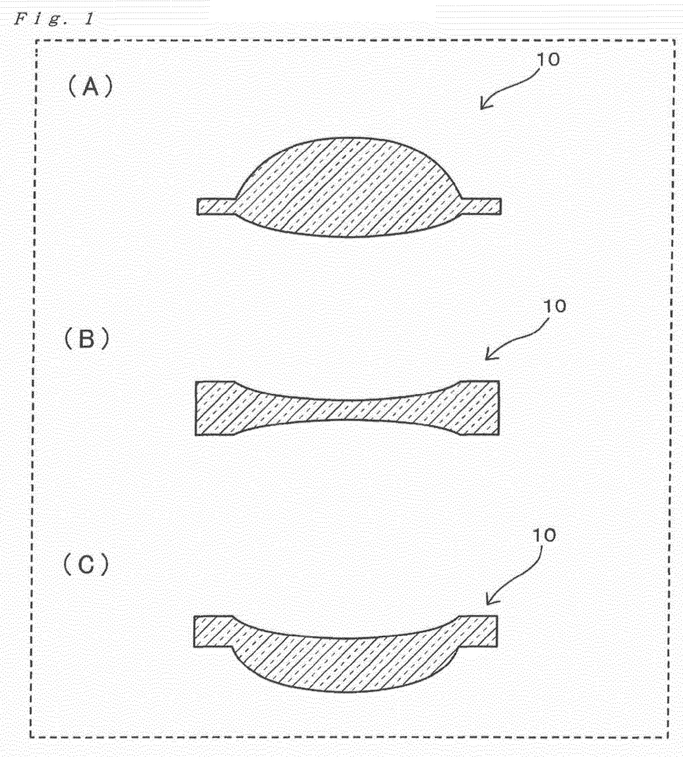

As used herein, the term "optical element" means, in a broader sense, a member through which light is transmittable. Thus, the optical element is a lens, a prism or a mirror, for example. Moreover, the optical element may also be, for example, a window product associated with a light transmission. In a narrower sense, the term "optical element" as used herein means a light-converging/diverging member such as a lens (see Fig. 1). In a case where the optical element 10 is a lens, "light transmission part" of the optical element 10 corresponds to a lens portion (i.e., a round portion including at least an optically effective surface).

According to the method of the present disclosure, a unique molding is performed regarding a peripheral face of the optical element 10 (i.e., the edge face of the flange 12 of the optical element 10) in that only the corner of the material body 20 is subjected to the mold transfer. This means that, with regard to the edge face of the flange of the optical element 10, the entire edge face is not subjected to the molding, but only the furthest edge portion which corresponds to a part of the edge face of the flange is subjected to the molding. In other words, only the corner of the material body 20 is subjected to the mold transfer to provide the edge face of the flange 12 of the optical element 10.

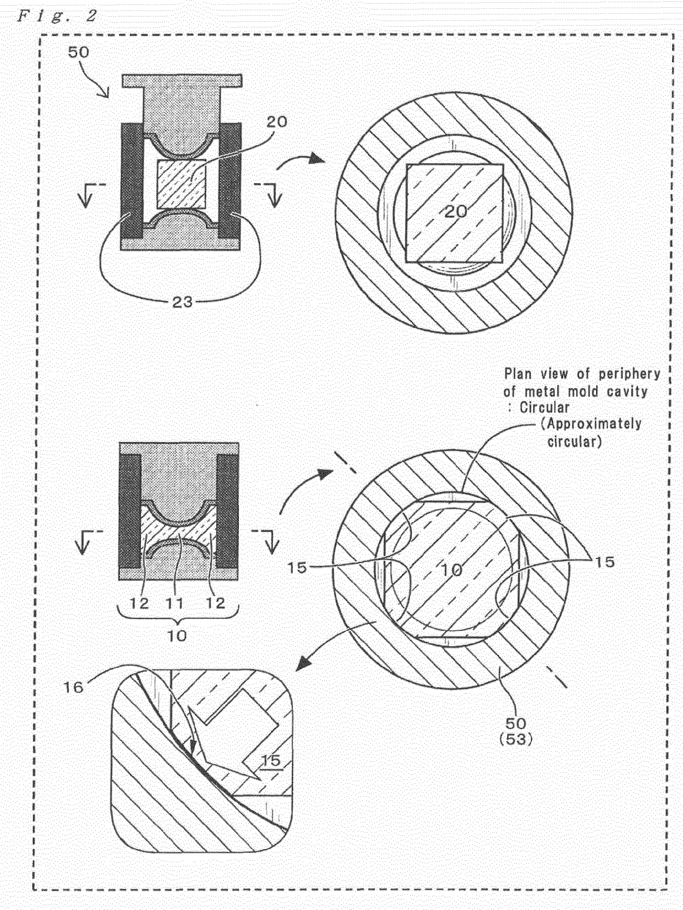

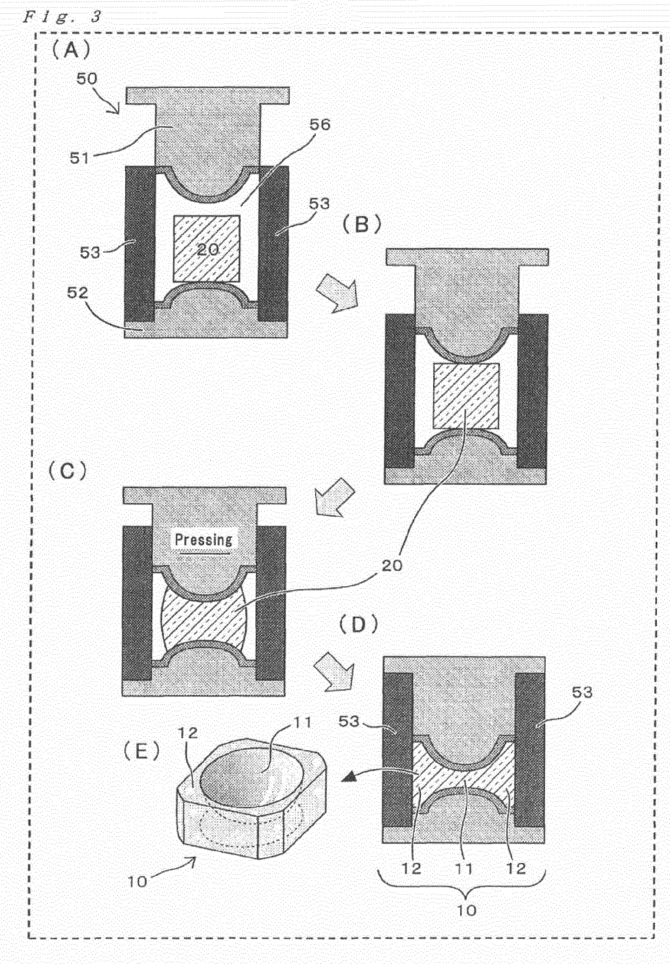

With reference to the schematic views of Figs. 2 and 3, the method according to the present disclosure will be described. As illustrated in Figs. 2 and 3, the mold-press molding is performed to provide the optical element 10 through a deformation of the material body 20 under pressure. According to the present disclosure, the mold-press molding gives an integrated form of the light transmission part 11 and the flange 12 of the optical element 10 from the material body 20 having a single form (see Fig. 3 in particular). In other words, the mold-press molding deforms the single material body 20 under pressure to provide the integrated form of the light transmission part 11 and the flange 12 from the single material body 20.

The material body 20 comprises a glass material, for example. The material body comprising such material is deformed under pressure to be molded into the glass optical element 10. In other words, the mold-press molding provides the integrated form of the light transmission part 11 and the flange 12 from the single-shaped material body 20 including the glass material. A glass material is typically difficult to mold because of its small coefficient of linear expansion. The method according to the present disclosure can avoid an excessive increase in a press force to be applied with respect to the material body 20 in the mold-press molding as will be described later, and thus can relatively easily mold the material body 20 including the glass material into the optical element 10.

In the method according to the present disclosure, the mold-press molding provides the optical element 10 from the material body 20 having the single form. With regard to the edge face of the flange 12, the mold-press molding allows only the corner of the material body 20 to be subjected to the mold transfer, and thereby forming the furthest edge portion 15 of the flange (see Fig. 2). The mold transfer is not performed for the entire of the edge face of the flange 12. As such, it is not necessary to deform the material body 20 to a large extent, so that the material body 20 is less susceptible to an excessive load during the mold-press molding. This can lead to a reduction in material loss of the material body 20 since there is no necessity to in advance provide a pre-shape which is close to the shape of the optical element 10 to be manufactured (e.g., a spherical shape or a flattened spherical shape, both of which are considered as a shape relatively close to the shape of a lens product) by grinding process or the like of the material body 20 prior to the mold-press molding. The flange 10 has a plurality of the furthest edge portions 15 at the edge face of the flange 10, the furthest edge portions 15 being located furthest from a center of the light transmission part 11 in a plan view. The plurality of furthest edge portions 15 can serve as a positioning face for placing the optical element 10.

In order to cause only the furthest edge portions 15 of the flange 12 to be more suitably subjected to the mold transfer, the material body 20 may have an approximately quadrangle shape in a plan view (see Fig. 2). In this case, the mold-press molding can easily cause only the four furthest edge portions 15 to be subjected to the mold transfer. That is, when the material body 20 having such an approximately quadrangle shape in a plan view is deformed in the mold-press molding, the mold transfer for the edge face of the flange 12 is performed as a whole with a time difference, not at one time. This means that the corners of the material body 20 can be subjected to the mold transfer prior to the remaining portion, except the corners, of the material body 20. This is particularly true when a periphery of a mold cavity has an approximately circular shape in a plan view. As illustrated in Fig. 2, when the material body 20 having the approximately quadrangle shape is put into the metal mold cavity having the approximately circular shape, the material portions corresponding to the furthest edge portions 15 of the flange 12 are positioned relatively in proximity to an inner peripheral face of the metal mold. In the mold-press molding, thus, the material portions corresponding to the furthest edge portions 15 of the flange are subjected to the mold transfer prior to the portion except those of the furthest edge portions.

For comparison, it is now assumed in the mold-press molding that the mold transfer is performed for the entire edge face of the flange. That is, it is assumed for comparison that the flange is wholly or entirely molded over the entire circumference thereof. In such a case, it is necessary to continuously apply the pressure to the material body 20 until the entire of the edge face of the flange reaches the inner peripheral face of the metal mold through a deformation of the material body 20 under pressure, which results in a larger press force to be applied to the material body 20. In a case where the material body 20 is brittle, an excessive press force to be applied to the material body 20 can impair the optical element 10 obtained by the mold-press molding of the material body 20. It is thus difficult to use a brittle material for the material body in a case where the flange is molded over the entire circumference thereof. In a lens having a flange molded over the entire circumference thereof, the lens has a large area of molded end portion. In a cooling process after the molding, a cracking can tend to occur in the case of the large area of the molded end portion. Specifically, such cooling process after the molding allows an end face of the metal mold and the large end face of the lens to shrink while being in close contact with each other. In this regard, a difference in coefficient of linear expansion between the metal mold and the lens can bring about a difference in their shrinkages, which can give rise to a stress, thereby causing the cracking to occur. In this case, when the larger area of the molded end portion is provided, a larger stress tends to be given.

In contrast to this, according to the method of the present disclosure, the mold transfer is performed for only the furthest edge portion 15 of the flange 12, which makes it possible for the material body 20 to be less likely to receive an excessive press force during the mold-press molding. The method of the present disclosure can thus adopt a brittle material as that of the material body 20. In this respect, a glass material such as a chalcogenide material and/or a chalcohalide material is regarded as a lens material excellent in optical characteristics, but is regarded as being not typically suitable for a mold-press molding since it is vulnerable to a press force. The method of the present disclosure can use such a glass material. In addition, since the material body 20 is less susceptible to an excessive load during the mold-press molding according to the present disclosure, there is no necessity to beforehand provide the material body having a shape which is relatively close to the shape of the optical element 10 by, for example, grinding process of the material body prior to the mold-press molding. As a result, the material loss of the material body 20 can be reduced. From this viewpoint, it becomes possible to positively adopt the glass material such as the chalcogenide material and/or the chalcohalide material.

Taking a more specific case where a lens is manufactured as the optical element 10 for example, the method of the present disclosure will be described. According to the method of the present disclosure, the entire of an edge portion in a lens is not molded, but only the four corners are subjected to a mold-transfer. Such transfer of only the four corners, together with a mold-transfer of a lens effective face, is performed by a mold press molding. According to the method of the present disclosure, there is no necessity to prepare a preform having such a shape that is relatively close to the shape of a lens product prior to the mold-press molding, which can lead to a reduction in material loss. This can also facilitate a use of a glass material such as a chalcogenide material and/or a chalcohalide material. That is, it is possible to use the material body having desired optical characteristics with a reduced material loss, and thereby making it possible to manufacture a lens with high accuracy at low cost.

In the following, the method according to the present disclosure will be described in more detail with reference to the drawings.

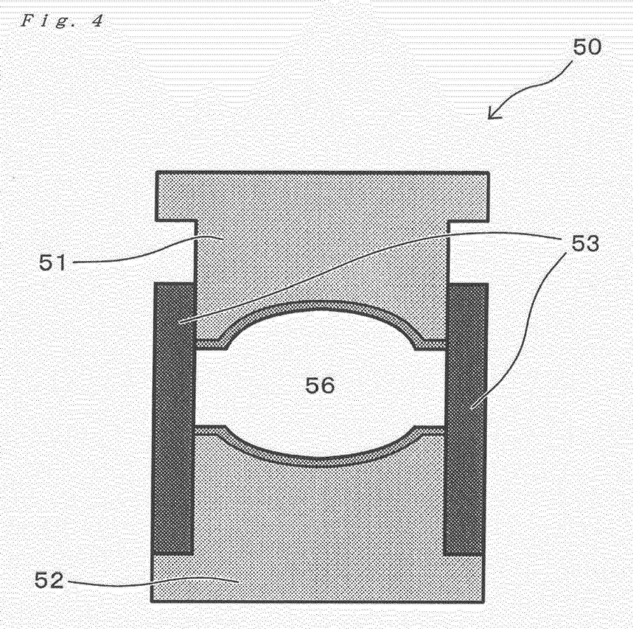

Fig. 4 illustrates a metal mold for use in the mold-press molding. As illustrated in Fig. 4, the metal mold 50, which is used in the method of the present disclosure, includes, for example, an upper metal mold 51, a lower metal mold 52 and a mold sleeve part 53. A pair of the upper metal mold 51 and the lower metal mold 52 is provided as a mold main part. The upper metal mold 51 and the lower metal mold 52, which form a mold cavity 56 therebetween, are driven to be moved relatively close to each other or relatively away from each other. The material body 20 is deformed under pressure between the upper metal mold 51 and the lower metal mold 52, so that at least the light transmission part of the optical element 10 is shaped. In a case where the optical element 10 is a lens, the upper metal mold 51 and the lower metal mold 52 can apply a press force to the material body 20 to deform the material body 20. The shape of a lens portion which is a "main part" of the optical element 10 is thus provided. The mold sleeve part 53 has a "cylindrical/tubular shape" as can be understood from its designation, and is disposed on an outer peripheral face of the mold main part. The mold sleeve part 53 is a mold member that contributes to a formation of the mold cavity together with the upper metal mold 51 and the lower metal mold 52. The mold sleeve part 53 particularly serves to define an outer periphery of the mold cavity.

As can be understood from the above, the term "mold main part" as used herein means a main member of metal mold, contributing to a formation of most of the mold cavity. On the other hand, the term "mold sleeve part" as used herein means a sub-member, provided at the outer peripheral face of the mold main part so as to constitute at least a part of the body of the metal mold. The mold cavity is defined as a space surrounded by the mold main part (i.e., the upper metal mold and lower metal mold) and the mold sleeve part. As such, the mold sleeve part is a tubular mold member for defining the outer periphery of the mold cavity.

In a preferred embodiment of the present disclosure, the mold cavity has a circular shape or an approximately circular shape in its plan view. That is, an inner peripheral face of the mold sleeve part, which defines the periphery of the mold cavity, preferably has the circular shape or the approximately circular shape in a plan view. Specifically, for example, the outer peripheral face of the mold main part has a columnar form, and the cylindrical mold sleeve part is disposed on the outer peripheral face of the mold main part, and thereby making it possible to define the circular shape or the approximately circular shape of the mold cavity in a plan view.

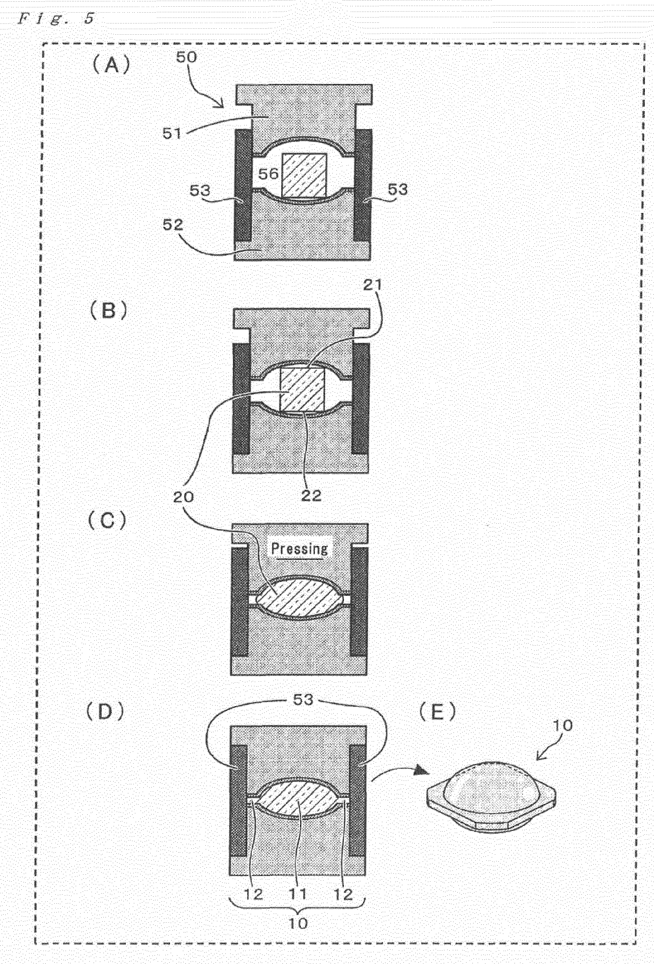

Referring to Figs. 3 and 5, the mold-press molding will be now described in a time series manner. Figs. 3(A) to 3(E) illustrate a process of manufacturing a biconcave lens by the mold-press molding, whereas Figs. 5(A) to 5(E) illustrate a process of manufacturing a biconvex lens by the mold-press molding.

In performing the mold-press molding, first, the material body 20 is disposed into the metal mold 50 as illustrated in Fig. 3(A) and Fig. 5(A). In other words, as illustrated in Fig. 3(A) and Fig. 5(A), the material body 20 is placed in the mold cavity 56 surrounded by the upper metal mold 51, the lower metal mold 52 and the mold sleeve part 53.

The material body 20 is preferably in a single form. In a preferred embodiment of the present disclosure, the material body 20 has a prismatic shape. The material body 20 with its prismatic shape has an approximately quadrangle shape in a plan view. Thus, the four corners of the material body 20 having the prismatic shape are more easily subjected to the mold transfer when a press force from the metal mold is applied to the material body 20 to deform the material body 20.

In a case where the material body 20 having the prismatic shape is obtained from an ingot thereof, material loss is small. In other words, there is no need to grind the material body 20 to use it for the method of the present disclosure, the grinding of the material body being for giving a shape thereof relatively close to the shape of a lens product, such as a spherical shape or a flattened spherical shape. Such no grinding of the material body 20 makes it possible to reduce the material loss thereof. When the material body 20 having the prismatic shape is used, an enclosed space is hardly given between the inner surface of the metal mold and the material body. This means that the use of the material body 20 having the prismatic shape hardly causes "air space" in the mold-press molding as compared with, for example, the use of a preform having a columnar shape or having a rounded outer contour with a large radius of curvature. As such, the use of the material body 20 having the prismatic shape is preferable.

The term "having a prismatic shape" as used herein means, in a broader sense, that the material body 20 has an angular shape as a whole, such as a cubic shape or a rectangular parallelepiped shape. In a case where the optical element 10 is a lens product, the term "having a prismatic shape" means that the shape of the material body 20 is relatively further away from the shape of the lens product as a whole than that of a spherical shape or a flattened spherical shape of the material body. In a narrower sense, the term "having a prismatic shape" means that the material body 20 has an approximately quadrangle shape in a plan view such that the furthest edge portions 15 are subjected to the mold transfer earlier than the other portion except the furthest edge portions 15 in the mold-press molding with regard to the face corresponding to the edge face of the flange of the optical element 10.

After the material body 20 is charged into the metal mold 50, the material body 20 is subjected to a press force from the heated metal mold 50, and thereby undergoing a deformation. Specifically, the material body 20 is heated by the heat from the metal mold 50, and thus can be deformed by the press force from the metal mold 50 (see Figs. 3(B) and 3(C) as well as Figs. 5(B) and 5(C)), which leads to a desired shape of the material body 20. More specifically, the material body 20 having the single form is plastically deformed by the press force from the metal mold 50. In doing so, the shape of the inner face of the metal mold 50 (particularly, the upper metal mold 51 and the lower metal mold 52) is transferred onto the material body 20. The integrated form of the flange 12 and the light transmission part 11 is thus provided from the material body 20. In a case where a biconvex lens is formed from the material body 20 having the prismatic shape, "air space" is hard to generate at an upper face 21 or a lower face 22 of the material body 20 (see Fig. 5(B)), which facilitates the manufacturing of a desired optical element.

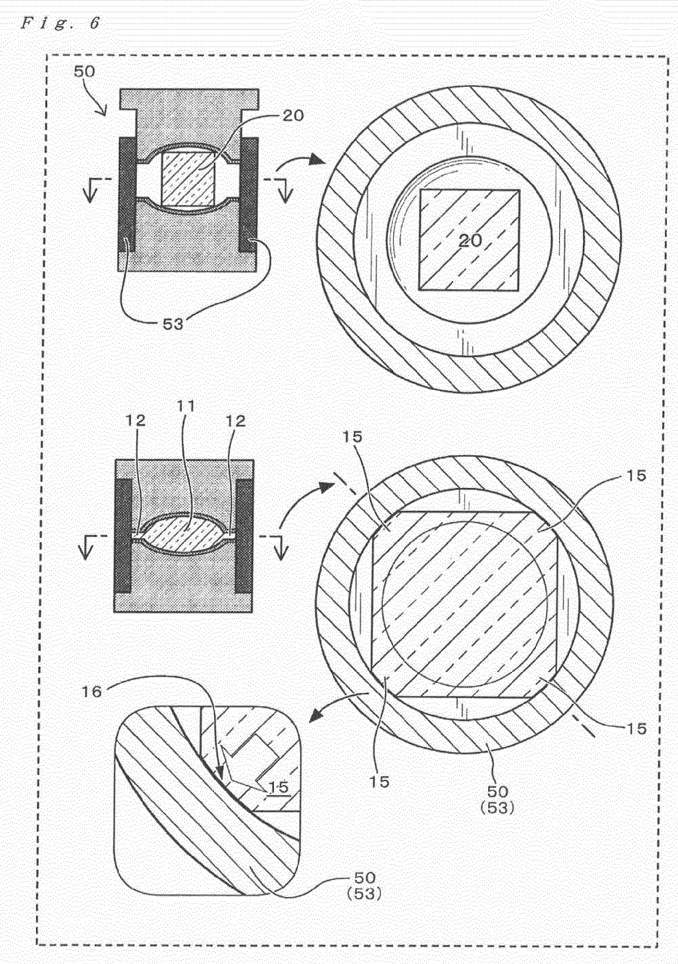

The material body 20 in the mold-press molding is plastically deformed to extend outward until it comes into contact with the mold sleeve part 53 (see Fig. 3(D) and Fig. 5(D)). Specifically, the deformed material body 20 is brought into contact with an inner peripheral face 58 of the mold sleeve part 53 having a circular shape or an approximately circular shape in a plan view (see also Figs. 2 and 6). At this time, with regard to the peripheral face corresponding to the edge face of the flange 12 of the optical element 10, only the corners of the material body 20, i.e., the furthest edge portions 15 are subjected to the mold transfer. Specifically, with regard to the edge face of the flange 12 of the optical element 10, the entire edge face is not subjected to the mold transfer, but only the furthest edge portions 15 corresponding to a part of the edge face of the flange are subjected to the mold transfer. More specifically, for molding the peripheral face (i.e., the outer edge face) of the optical element 10, only the furthest edge portions 15 of the peripheral face (i.e., of the outer edge face) are pressed against the mold sleeve part 53. In other words, the edge face of the flange 12 of the optical element 10 is formed through the mold transfer, such that only the portions corresponding to the furthest edge portions 15 of the edge face of the flange 12 are pressed against the mold sleeve part 53.

The applying of the press force from the metal mold 50 may be stopped after the furthest edge portions 15 are pressed against the mold sleeve part 53. Thus, only the furthest edge portions 15 of the edge face of the flange 12 can suitably undergo the transfer molding. Take a case where the material body 20 with its prismatic shape comprises a glass material (e.g., a chalcogenide material and/or a chalcohalide material) as an example. In this case, in order that only the furthest edge portions 15 are suitably subjected to the transfer molding, the material body 20 of the chalcogenide material may be subjected to the mold-press molding for 10 seconds to 5 minutes under such a condition that a temperature of the metal mold is about 250 to 350°C and an application of pressure is about 5 to 100 kgf. While on the other hand, in order that only the furthest edge portions 15 are suitably subjected to the transfer molding, the material body 20 of the chalcohalide material may be subjected to the mold-press molding for 30 seconds to 30 minutes under such a condition that a temperature of the metal mold is about 350 to 450°C and an application of pressure is about 5 to 100 kgf. These cases, however, are merely exemplary, and the present disclosure is not limited thereto.

Subsequent to the mold transfer, the material body 20 is demolded from the metal mold at the final step of the mold-press molding. Specifically, the material body 20, which has been plastically deformed by the mold-press molding, is unloaded and cooled, and then is finally taken out of the metal mold. As a result, there can be obtained the desired optical element 10 (see Fig. 3(E) and Fig. 5(E)).

The mold-press molding according to the present disclosure can provide an advantageous effect at the time of the demolding. Specifically, according to the method of the present disclosure, at a point in time before the demolding step, only the furthest edge portions 15 of the edge face of the flange are in contact with the mold sleeve part. The material body 20 plastically deformed by the mold-press molding is easy to separate from the metal mold 50 since only the furthest edge portions 15 of the edge face of the flange 12 are in contact with the metal mold 50. If the entire edge face of the flange 12 is in contact with the metal mold 50, the optical element 10 can tend to be broken upon being separated from the metal mold 50, due to a difference in bonding strength between the material body 20 and the metal mold 50. In this respect, the method of the present disclosure can more suitably take the optical element 10 out of the metal mold 50 since only the furthest edge portions 15 of the edge face of the flange 12 are in contact with the metal mold. In a case where the optical element 10 is manufactured as a lens, it should be noted that a failure of the demolding can tend to occur if an edge portion is wholly or entirely molded over the entire circumference of the lens. In contrast, the mold-transferring of only the four corners of the material body according to the present disclosure can suppress a breaking and/or a cracking at the time of the demolding.

The manufacturing method of the present disclosure can be embodied in various ways, which will be hereinafter described.

### (Chamfering Embodiment)

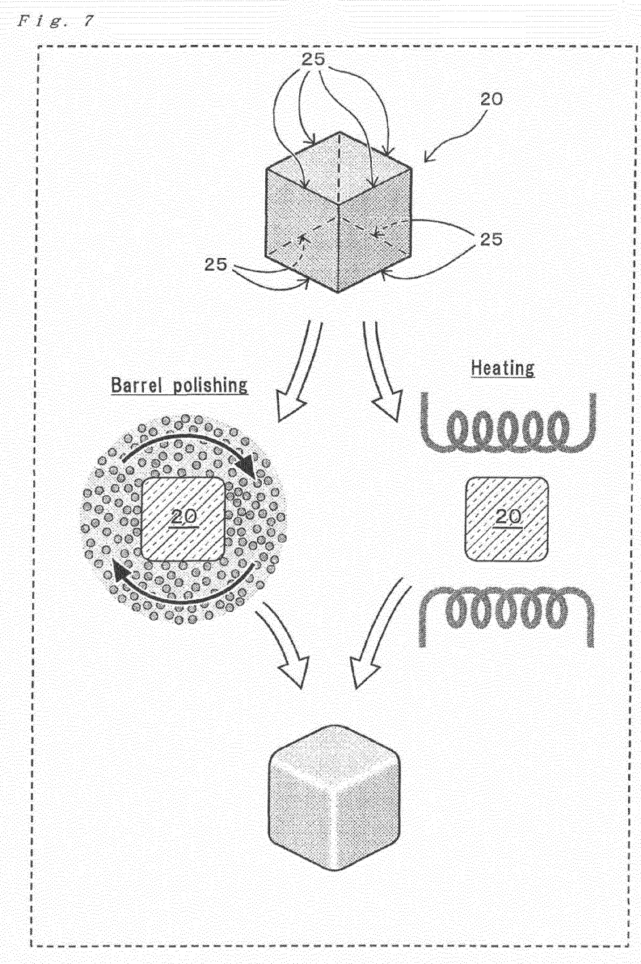

According to this embodiment, the material body 20 is chamfered. Specifically, the edge portions of the material body 20 are chamfered prior to the mold-press molding, as illustrated in Fig. 7. This embodiment is particularly preferable in a case where the material body has sharp edge portions at a point in time before being subjected to the mold-press molding, for example, in a case where the material body has a prismatic shape. It is preferred that the edge portions 25 of the respective faces of the material body 20 are subjected to the chamfering treatment.

The chamfering may be a barrel polishing (see the left side in the middle of Fig. 7). Thus, the edge portions 25 of the material body 20 may be rounded by the barrel polishing. The term "barrel polishing" as used herein means, in a broader sense, a process of rounding the edge portion 25 of the material body 20 by a relative abrasion between the material body 20 and a polisher material. In a narrower sense, the term "barrel polishing" means that the material body 20 and the polisher material (e.g., at least one kind of polisher material selected from a medium, a compound, water and the like) are put in a barrel container, and then a rotation and/or vibration of the barrel is/are performed such that the edge portion 25 of the material body 20 is rounded. The type of the barrel is not particularly limited. Examples of the barrel may include, but not limited to, a rotary barrel, a vibrating barrel, and a centrifugal flow barrel.

The chamfering may be a thermal processing (see the right side in the middle of Fig. 7). The term "thermal processing" as used herein means, in a broader sense, a process of rounding the edge portion 25 of the material body 20 by applying the heat to the material body 20. In a narrower sense, the term "thermal processing" means that the edge portion 25 of the material body 20 is rounded in such a manner that the edge portion 25 of the material body 20 is locally heated so as to be plastically deformed. Examples of the heating means may include, but not limited to, a vacuum electric furnace, a belt furnace, a tubular furnace, and a warm air-type heater.

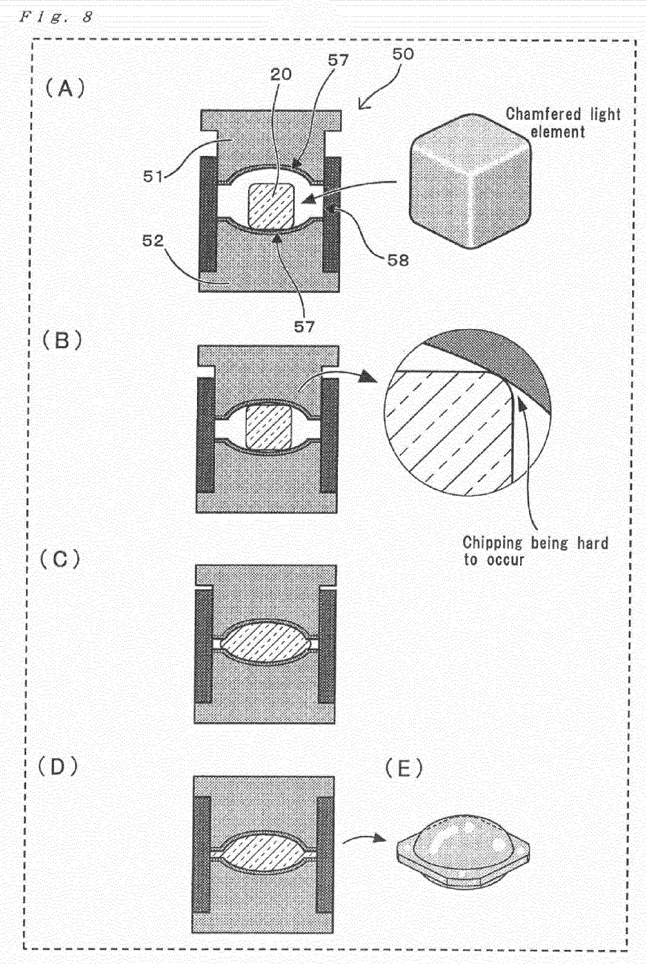

In a case where the edge portions 25 of the element 20 are chamfered, a chipping is hard to occurs at, for example, a contact portion between an optical-forming face of a mold inner face 57 and the material body at an initial stage in time of the mold-press molding (see Fig. 8). That is, it makes it hard to bring about such a disadvantageous phenomenon that the edge portions 25 of the material body 20 are chipped when the material body 20 is deformed under pressure between the upper metal mold 51 and the lower metal mold 52 of the metal mold 50. This is particularly true for a case where the optical element 10 is a biconvex lens. The reason therefor is as follows. In a case where a biconvex lens is manufactured, a press force applied from the metal mold 50 to the material body 20 at the initial stage of the mold-press molding tends to be concentratedly applied to the edge portion 25 of the material body 20, which can generally tend to cause the chipping.

### (Lens Product Embodiment)

In this embodiment, a lens is manufactured as the optical element 10. That is, a lens for light-converging/diverging is manufactured. A type of the lens is not particularly limited. The lens may be, for example, a convex lens or a concave lens. The convex lens may be, for example, a biconvex lens (see Fig. 1(A)) or a plano-convex lens. The concave lens may be, for example, a biconcave lens (see Fig. 1(B)) or a plano-concave lens. The lens may also be a meniscus lens as illustrated in Fig. 1(C).

As described above, in the method according to the present disclosure, only the portions corresponding to only the furthest edge portions 15 of the edge face of the flange 12 are subjected to the mold transfer. Therefore, the material body 20 is less likely to receive the excessive press force during the mold-press molding, which can facilitate a use of a brittle material body 20, for example. This means that the method of the present disclosure can use, for example, a chalcogenide material and/or a chalcohalide material. The chalcogenide material can have a suitable transmission characteristic with respect to an infrared region. The chalcohalide material can have a suitable transmission characteristic with respect to a visible region as well as the infrared region. As such, the manufacturing method according to the present disclosure can suitably provide the optical element 10 as a lens for at least the infrared region.

### [Optical Element of the Present Disclosure]

An optical element according to the present disclosure is manufactured by the method as described above. That is, the optical element of the present disclosure corresponds to one obtained from the material body through the mold-press molding described above. Accordingly, in the optical element of the present disclosure, with regard to an edge face of a flange, only a furthest edge portion corresponding to the corner of the material body has a mold-transferred form.

The optical element of the present disclosure comprises a light transmission part and a flange extending outward from the light transmission part. In a case where the optical element is a lens, the optical element of the present disclosure comprises the light transmission part serving as a lens part, and the flange extending outward from the light transmission part.

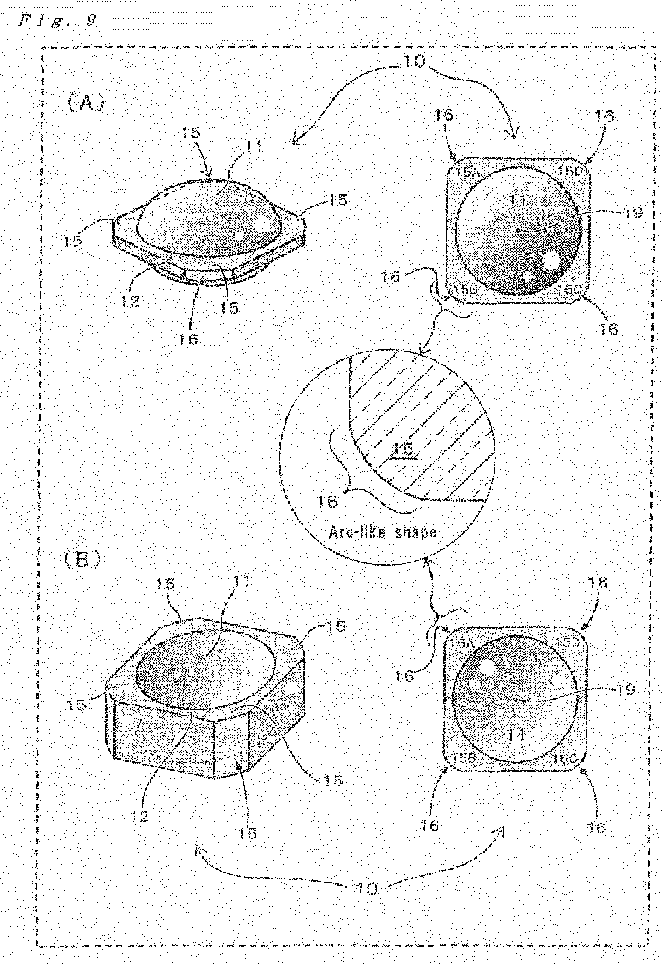

Figs. 9(A) and 9(B) each illustrate schematic views in the case where the optical element 10 is the lens. In Fig. 9(A), a perspective view and a plan view of an exemplary outer appearance of a biconvex lens are shown. In Fig. 9(B), a perspective view and a plan view of an exemplary outer appearance of a biconcave lens are shown.

As illustrated in Figs. 9(A) and 9(B), the optical element 10 at least includes the light transmission part 11 and the flange 12 extending outward from the light transmission part 11. In the optical element 10 of the present disclosure, an edge face 16 of the furthest edge portion 15 of the flange 12 serves as a positioning face for placing the optical element 10.

The edge face 16 of the furthest edge portion 15 of the flange 12 has the mold-transferred form, which means that the optical element 10 has the furthest edge portion positioned desirably and accurately therein. That is, the mold-press molding for obtaining the optical element 10 subjects only the edge face 16 to the mold transfer to provide the edge face of the flange 12, the mold-transferred edge face 16 corresponding to the corner of the material body 20, which leads to a desirable and accurate positioning of the furthest edge portions 15 of the flange 12. In the optical element 10 of the present disclosure, therefore, the furthest edge portions 15 can be suitably used as a positioning face. The only the edge face portions 16 of the corners in the edge face of the flange 12 can be utilized as the positioning face for a lens barrel assembling.

In a preferred embodiment, the outer periphery of the optical element 10 has an approximately quadrangle shape as a whole. Specifically, an outer contour of the flange 12 has an approximately quadrangle shape in a plan view of the optical element 10, and the flange has the four corners, namely the four cornered edge faces 16. This means that the four furthest edge portions are respectively at the corners of the flange having the approximately quadrangle shape. In a case where the optical element 10 is obtained from the material body 20 having an approximately quadrangle shape in a plan view by the mold-press molding, the four corners have the mold-transferred form at the edge faces 16, and thus are accurately positioned. In the optical element 10 of the present disclosure, therefore, the edge faces of the four corners can be used as the positioning faces in the lens barrel assembling.

In the optical element 10 of the present disclosure, the plurality of the furthest edge corners of the flange serve as the positioning portions for placing the optical element 10, and thus have a unique arrangement. Specifically, the furthest edge portions 15 are in a symmetrical arrangement with respect to the center 19 of the light transmission part in a plan view of the optical element 10. According to an embodiment as illustrated in Figs. 9(A) and 9(B), the four furthest edge portions 15A to 15D are in a point symmetrical arrangement or a line symmetrical arrangement with respect to the center 19 (i.e., an optical axis point) of the light transmission part 11 as the lens part. This means that the edge faces of the four corners of the flange are in the symmetrical arrangement with respect to the center of the light transmission part. More specifically, the four edge faces 16 of the flange are in the symmetrical arrangement with respect to the center 19 of the light transmission part. That is, the four edge faces 16 of the flange can be in the point symmetrical arrangement or the line symmetrical arrangement with respect to the center 19 (i.e., the optical axis point) of the lens part. As such, the edge faces of the corners can be suitably utilized as the positioning face in the lens barrel assembling, and thus the optical element 10 can be fixed to the lens barrel with desired positional accuracy.

In the optical element of the present disclosure, the edge face 16 of each furthest edge portion 15 of the flange 12 is one obtained by the mold transfer, and therefore has a unique shape/form. Specifically, each furthest edge portion 15 has an arc shape/form at the periphery of the flange 12. As described above, the edge face of each corner of the material body 20 is subjected to the transfer molding in such a manner that only the edge face of each corner of the material body 20 is pushed against the inner peripheral face of the metal mold having the approximately circular shape. Therefore, such an edge face preferably has an arc shape/form in a plan view.

In other words, as illustrated in Figs. 9(A) and 9(B), the furthest edge portions 15 each have an arc-like periphery in a plan view of the optical element 10. Since the furthest edge portions 15 have the arc-like periphery, they can be suitably used as a positioning part with respect to the cylindrical lens barrel. In this regard, the shape of the lens barrel or optical element receiving member is not limited to a cylindrical shape. Even in a case where the lens barrel or the optical element receiving member has a quadrangle shape, the edge face of each corner of the optical element can also be used as the positioning part for the assembling.

Since the optical element 10 of the present disclosure is one preferably obtained from the material body 20 having the single form by the mold-press molding. Therefore, the optical element 10 of the present disclosure has a unique configuration. Specifically, in the optical element 10 of the present disclosure, the light transmission part 11 and the flange 12 are preferably made of the same material and integrated with each other. According to an embodiment as illustrated in Figs. 9(A) and 9(B), the light transmission part 11 serving as the lens part and the flange 12 located outside the light transmission part 11 are made of the same material as each other, and that they are integrated with each other. Such configuration in which the light transmission part 11 and the flange 12 are made of the same material and integrated with each other can increase homogeneity as compared with a configuration in which the light transmission part 11 and the flange 12 are made of different materials and integrated with each other. Thus, the configuration according to the present disclosure can further improve a structural strength of the optical element 10.

The optical element 10 of the present disclosure is one obtained under a condition that the press force applied to the material body 20 in the mold-press molding is less likely to become excessive, owing to only the mold transfer for the furthest edge portions 15 of the flange 12. Therefore, the optical element 10 can be suitably obtained from, for example, a chalcogenide material and/or a chalcohalide material through the mold-press molding. According to a preferred embodiment, the optical element 10 includes the chalcogenide material and/or the chalcohalide material. The optical element 10 can comprise a "chalcogenide-based" glass and/or a "chalcohalide-based" glass. In short, it is preferred that the optical element 10 is made of a chalcogenide glass or a chalcohalide glass.

The term "chalcogenide material" as used herein means, in a broader sense, a material that contains, as one of main components, at least one chalcogen element selected from the group consisting of S (sulfur), Se (selenium) and Te (tellurium) in the VIb group of the periodic table. For example, the chalcogenide material may be a material having a composition in which at least one chalcogen element selected from the group consisting of S (sulfur), Se (selenium) and Te (tellurium) is combined with at least one selected from the group consisting of Ge (germanium), As (arsenic), Sb (antimony), P (phosphorus), Ga (gallium), In (indium) and Si (silicon). The term "chalcohalide material" as used herein means a material having a composition obtained by introducing, into such a chalcogenide material, a halogen element (i.e., at least one selected from the group consisting of fluorine, chlorine, bromine and iodine) or a compound thereof. The chalcogenide material and/or the chalcohalide material can have a suitable transmission characteristic on an infrared region or on both the infrared region and a visible region. Therefore, the optical element 10 of the present disclosure can be suitably used as a lens for allowing at least an infrared-region light ray to be transmitted through the lens.

Although some embodiments of the present invention have been hereinbefore described, they are only for illustrative purpose regarding the typical examples. The method and the optical element 10 according to the present disclosure are not limited to these embodiments. It would be readily appreciated by those skilled in the art that various embodiments are possible.

For example, the foregoing description is given with reference to the drawings on the assumption that the number of the furthest edge portions of the flange 12 is "four"; however, the present disclosure is not necessarily limited thereto. In the flange 12, the number of the furthest edge portions 15 may be three, five, six or eight, for example. Even in such a case, only the furthest edge portions 15 are subjected to the mold transfer to provide the flange 12. The three, five, six or eight furthest edge portions 15 are preferably in a symmetrical arrangement with respect to the center (e.g., an optical axis when the optical element 10 is a lens product) of the light transmission part 11 in the optical element 10. With this configuration, the edge face of each furthest edge portion 15 can be suitably utilized as the positioning face in the lens barrel assembling, such that the optical element 10 can be fixed to the lens barrel with desired accuracy.

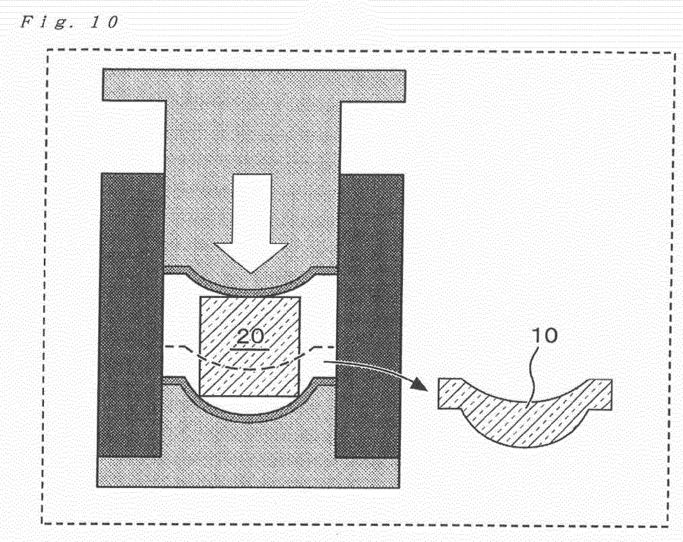

Moreover, the embodiment in which a biconcave lens or a biconvex lens as a lens is subjected to a mold-press molding has been mainly described above; however, the present disclosure is not limited thereto. As illustrated in, for example, Fig. 10, the present disclosure may also be applied even in a case where the optical element 10 as a meniscus lens is provided through a mold-press molding. Even in such case, it is preferred with regard to an edge portion of the material body 20 that particularly an edge portion to be brought into contact with the optical-forming face of the mold inner face 57 is chamfered. This is because the chipping and the like can be suitably suppressed.

### INDUSTRIAL APPLICABILITY

The optical element manufactured by the method of the present disclosure can be used as various kinds of lenses. In particular, the optical element according to the preferred embodiment of the present disclosure is made of, for example, a chalcogenide material and/or a chalcohalide material. The optical element of the present disclosure can therefore be used as, for example, infrared lenses (i.e., lenses for at least a far-infrared ray; however, they are merely exemplary), visible lenses, or wideband transmission lenses that allow both an infrared-region light ray and a visible-region light ray to be transmitted therethrough.

### DESCRIPTION OF REFERENCE NUMERALS

10: Optical element
11: Light transmission part
12: Flange
15, 15A-15D: Furthest edge portion
16: Edge face
19: Center
20: Material body
21: Upper face
22: Lower face
25: Edge portion
50: Metal mold
51: Upper metal mold
52: Lower metal mold
53: Mold sleeve part
56: Mold cavity
57: Mold inner face
58: Inner peripheral face

## Claims

1. A method for manufacturing an optical element, wherein
a mold-press molding is performed by use of a material body having a prismatic shape to form a light transmission part and a flange of the optical element, the flange extending outward from the light transmission part; and
only a corner of the material body is subjected to a mold transfer to provide an edge face of the flange.

2. The method according to claim 1, wherein the material body has an approximately quadrangle shape in a plan view, and the mold-press molding causes the four corners of the main body to be subjected to the mold transfer.

3. The method according to claim 1 or 2, wherein the material body comprises a glass material.

4. The method according to any one of claims 1 to 3, wherein the material body comprises a chalcogenide material and/or a chalcohalide material.

5. The method according to any one of claims 1 to 4, wherein the mold-press molding deforms the single material body under pressure to provide an integrated form of the light transmission part and the flange from the single material body.

6. The method according to any one of claims 1 to 5, wherein a metal mold is used in the mold-press molding, the metal mold being composed at least of a mold main part and a mold sleeve part, and
the mold transfer causes only the corner of the material body to be pressed against the mold sleeve part.

7. The method according to any one of claims 1 to 6, wherein an edge portion of the material body is chamfered prior to the mold-press molding.

8. The method according to claim 7, wherein the chamfering is based on a thermal processing.

9. The method according to any one of claims 1 to 8, wherein a lens is manufactured as the optical element, the lens being one for allowing at least an infrared region to be transmitted through the lens.

10. An optical element comprising a light transmission part and a flange extending outward from the light transmission part, wherein
the flange has a plurality of furthest edge portions at an edge face of the flange, the furthest edge portions being located furthest from a center of the light transmission part, and
the plurality of furthest edge portions serve as a positioning face for placing the optical element.

11. The optical element according to claim 10, wherein an outer contour of the flange has an approximately quadrangle shape in a plan view of the optical element, and
the four furthest edge portions are respectively at corners of the approximately quadrangle shape of the flange.

12. The optical element according to claim 10 or 11, wherein the furthest edge portions are in a symmetrical arrangement with respect to the center of the light transmission part in a plan view of the optical element.

13. The optical element according to any one of claims 10 to 12, wherein the furthest edge portions each have an arc-like periphery in a plan view of the optical element.

14. The optical element according to any one of claims 10 to 13, wherein the optical element comprises a chalcogenide material and/or a chalcohalide material.

15. The optical element according to any one of claims 10 to 14, wherein the light transmission part and the flange are made of the same material as each other, and the light transmission part and the flange have an integrated form with each other.

16. The optical element according to any one of claims 10 to 15, wherein the optical element is a lens for allowing at least an infrared-region light ray to be transmitted through the lens.
